# EUROPEAN PATENT APPLICATION

(11) **EP 4 757 414 A1**
(43) Date of publication of application: **10.06.2026**
(21) Application number: 23946921.6
(22) Date of filing: 28.07.2023
(51) Int. Cl.: H04W 36/08, H04W 48/10

(54) **COMMUNICATION METHOD, APPARATUS AND DEVICE, CHIP, STORAGE MEDIUM, PRODUCT, AND PROGRAM**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Penza, Giancarlo
(86) International application number: PCT/CN2023/109763
(87) International publication number: WO 2025/024959

(57) **Abstract**

The present application discloses a communication method, apparatus and device, a chip, a storage medium, a product, and a program. The method comprises: a first terminal device receiving first information, the first information being used to indicate whether a terminal device corresponding to each of one or more types is allowed to access a first cell.

## Description

### TECHNICAL FIELD

Embodiments of the present disclosure relate to the field of communication technologies, and specifically relate to a communication method, apparatus, and device, a chip, a storage medium, a product, and a program.

### BACKGROUND

With the continuous development of communication technologies, a terminal device used by a user needs to access a serving cell, so that various tasks can be handled using network resources. However, in the related art, the network device controls access of all terminal devices based on one set of parameters, which is disadvantageous for achieving more flexible control over access of the terminal devices by the network device, and further reduces utilization of network resources.

### SUMMARY

Embodiments of the present disclosure provide a communication method, apparatus, and device, a chip, a storage medium, a product, and a program.

In a first aspect, an embodiment of the present disclosure provides a communication method, including the following operations.

A first terminal device receives first information. Here, the first information is used to indicate whether terminal device(s) corresponding to each of one or more types are allowed to access a first cell.

In a second aspect, an embodiment of the present disclosure provides a communication method, including the following operations.

A network device transmits first information. Here, the first information is used to indicate whether terminal device(s) corresponding to each of one or more types are allowed to access a first cell.

In a third aspect, an embodiment of the present disclosure provides a communication apparatus, including a receiving unit.

The receiving unit is configured to receive first information. Here, the first information is used to indicate whether terminal device(s) corresponding to each of one or more types are allowed to access a first cell.

In a fourth aspect, an embodiment of the present disclosure provides a communication apparatus, including a transmitting unit.

The transmitting unit is configured to transmit first information. Here, the first information is used to indicate whether terminal device(s) corresponding to each of one or more types are allowed to access a first cell.

In a fifth aspect, an embodiment of the present disclosure provides a communication device including a processor and a memory. The memory is used to store a computer program, and the processor is used to invoke and run the computer program stored in the memory to perform the communication method in the first aspect or the second aspect described above.

In a sixth aspect, an embodiment of the present disclosure provides a chip for implementing the communication method in the first aspect or the second aspect described above.

Specifically, the chip includes: a processor, configured to invoke and run a computer program from a memory, to enable a device installed with the chip to perform the communication method in the first aspect or the second aspect described above.

In a seventh aspect, an embodiment of the present disclosure provides a computer-readable storage medium storing a computer program that, when executed by at least one processor, performs the communication method in the first aspect or the second aspect described above.

In an eighth aspect, an embodiment of the present disclosure provides a computer program product including computer program instructions. The computer program instructions cause a computer to perform the communication method in the first aspect or the second aspect described above.

In a ninth aspect, an embodiment of the present disclosure provides a computer program that, when run on a computer, causes the computer to perform the communication method in the first aspect or the second aspect described above.

Embodiments of the present disclosure provide a communication method, apparatus, and device, a chip, a storage medium, a product, and a program. The method may include that: a first terminal device receives first information from a network device, here, the first information is used to indicate whether terminal device(s) corresponding to each of one or more types are allowed to access a first cell. In this way, after receiving the first information, the first terminal device may learn of whether the terminal device(s) corresponding to each type are allowed to access the first cell. In other words, after receiving the first information, the first terminal device may learn of the type of the terminal device that is allowed to access the first cell and the type of the terminal device that is not allowed to access the first cell. As such, the first terminal device may subsequently determine, based on the first information, whether the first terminal device is allowed to access the first cell, thereby enabling the network device to more flexibly control access of the first terminal device while improving utilization of network resources.

### BRIEF DESCRIPTION OF THE DRAWINGS

The drawings illustrated here are used to provide a further understanding of the present disclosure, and constitute a part of the present disclosure. The illustrative embodiments of the present disclosure and the description thereof are used to explain the present disclosure, and do not constitute an improper limitation to the present disclosure. In the drawings:
FIG. 1 is a diagram of a scenario of a zero-power communication network.
FIG. 2 is a diagram of a circuit structure of a radio frequency power harvesting module.
FIG. 3 is a diagram of a circuit structure of back scattering communication.
FIG. 4 is a diagram of a circuit structure of resistive load modulation.
FIG. 5 is a flowchart of a communication method according to an embodiment of the present disclosure.
FIG. 6 is a first diagram of a scenario in which a first terminal device determines whether the first terminal device is allowed to access a first cell according to an embodiment of the present disclosure.
FIG. 7 is a second diagram of a scenario in which a first terminal device determines whether the first terminal device is allowed to access a first cell according to an embodiment of the present disclosure.
FIG. 8 is a third diagram of a scenario in which a first terminal device determines whether the first terminal device is allowed to access a first cell according to an embodiment of the present disclosure.
FIG. 9 is a fourth diagram of a scenario in which a first terminal device determines whether the first terminal device is allowed to access a first cell according to an embodiment of the present disclosure.
FIG. 10 is a fifth diagram of a scenario in which a first terminal device determines whether the first terminal device is allowed to access a first cell according to an embodiment of the present disclosure.
FIG. 11 is a first diagram of a compositional structure of a communication apparatus according to an embodiment of the present disclosure.
FIG. 12 is a second diagram of a compositional structure of a communication apparatus according to an embodiment of the present disclosure.
FIG. 13 is a structural diagram of a communication device according to an embodiment of the present disclosure.
FIG. 14 is a structural diagram of a chip according to an embodiment of the present disclosure.
FIG. 15 is a block diagram of a communication system according to an embodiment of the present disclosure.

### DETAILED DESCRIPTION

The technical solutions in the embodiments of the present disclosure are described below with reference to the drawings in the embodiments of the present disclosure. It is apparent that the described embodiments are part of the embodiments of the present disclosure, rather than all of the embodiments. All other embodiments that are arrived at by a person of ordinary skill in the art on the basis of the embodiments in the present disclosure without involving inventive skill fall within the scope of protection of the present disclosure.

Unless otherwise defined, all technical and scientific terms used herein have the same meanings as commonly understood by a person of ordinary skill in the technical field to which the present disclosure belongs. The terms used herein are only for the purpose of describing the embodiments of the present disclosure, and are not intended to limit the present disclosure.

When the following description refers to "some embodiments", said phrasing describes a subset of all possible embodiments, but it can be understood that "some embodiments" may be the same subset or different subsets of all possible embodiments, and may be combined with each other without conflict.

It is to be noted that the term "first\second\third" as referred to in the embodiments of the present disclosure is only to distinguish similar objects, and does not indicate specific ordering of objects. It can be understood that the specific order or sequential order of "first\second\third" may be interchanged if allowed, so that the embodiments of the present disclosure described herein can be implemented in an order other than those illustrated or described herein.

Additionally, the term "and/or" used in embodiments of the present disclosure is merely to describe associations between associated objects, indicating that there can be three kinds of relationships. For example, A and/or B, which may indicate three situations in which A exists alone, A and B exist simultaneously, and B exists alone. In addition, the character "/" herein generally indicates that the associated objects before and after this character are in an "or" relationship.

It should be understood that "indicating" mentioned in the embodiments of the present disclosure may be a direct indication or an indirect indication, or may also represent an association. For example, A indicating B may mean that A directly indicates B, for example, B may be obtained from A; or it may mean that A indirectly indicates B, for example, A indicates C, and B may be obtained from C; or it may mean that there is an association between A and B.

It should also be understood that "predefined/predefinition", "predefined/predefinition by a protocol", "predetermined/predetermination", or "predefined rules" mentioned in the embodiments of the present disclosure may be implemented by pre-storing corresponding codes, tables, or other means available for indicating relevant information in a device (e.g., terminal device), and the specific implementation is not limited in the present disclosure. For example, the predefinition may refer to being defined in a protocol. It should also be understood that in the embodiments of the present disclosure, the "protocol" may refer to a standard protocol in the field of communications, for example, it may include a long term evolution (LTE) protocol, a new radio (NR) protocol, and related protocols applied to future communication systems, and the present disclosure is not limited thereto.

The technical solutions recited in the embodiments of the present disclosure may be arbitrarily combined as long as they do not conflict with each other. In the description of the present disclosure, "a plurality of/multiple" means two or more, unless otherwise specifically defined.

The technical solutions of the embodiments of the present disclosure are applicable to various communication systems, such as an LTE system, an LTE time division duplex (TDD), a universal mobile telecommunication system (UMTS), an Internet of Things (IoT) system, a narrow band Internet of Things (NB-IoT) system, an enhanced machine-type communications (eMTC) system, a 5G communication system (also referred to as NR communication system), and/or a future communication system.

In the embodiments of the present disclosure, a terminal device may be a device that provides voice and/or data to a user, such as handheld devices and vehicle-mounted devices having wireless connection functions. At present, some examples of terminals include: an access terminal, user equipment (UE), a mobile phone, a tablet computer, a notebook computer, a palmtop computer, a mobile Internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in smart city, a wireless terminal in smart home, a cellular phone, a cordless phone, a session initiation protocol (SIP) phone, a wireless local loop (WLL) station, a personal digital assistant (PDA), a handheld device having a wireless communication function, a computing device or a further processing device connected to a wireless modem, a wearable device, a terminal device in a 5G network, a terminal device in a future evolved public land mobile network (PLMN), and/or the like, which is not limited in the embodiments of the present disclosure.

As an example rather than a limitation, in the embodiments of the present disclosure, the terminal device may also be a wearable device. The wearable device may also be referred to as a wearable smart device, and is a general term for wearable devices that are developed by intelligently designing daily wear applying a wearable technology, such as glasses, gloves, watches, clothes, and shoes. The wearable device is a portable device that is directly worn on the body or integrated into clothes or an accessory of a user. The wearable device is not only a hardware device, but also implements powerful functions by means of software support, data interaction, and cloud interaction. In a broad sense, wearable smart devices include those that are fully functional and large in size, and can implement complete or partial functions without dependence on smart phones, such as smart watches or smart glasses, and those that only focus on a certain type of application function and need to be used in cooperation with other devices such as smart phones, such as various smart bracelets, smart jewelry, for monitoring physical signs.

Additionally, in the embodiments of the present disclosure, the terminal device may alternatively be a terminal device in an IoT system. IoT is an important component of future information technology development, and its main technical feature is to connect an object to a network using a communications technology, thereby achieving an intelligent network for human-machine interconnection and object-object interconnection.

It should be noted that the terminal device and the network device (NW) may communicate with each other using a certain air interface technology (e.g., NR or LTE technology). The terminal device and the terminal device may also communicate with each other using a certain air interface technology (e.g., NR or LTE technology).

It should be noted that the apparatus for implementing the functions of the terminal device may be a terminal device, or may be an apparatus that can support the terminal device in implementing the functions, such as a chip system or a chip, and the apparatus may be installed in the terminal device. In the embodiments of the present disclosure, the chip system may consist of chips, or may include a chip and other discrete components.

In the embodiments of the present disclosure, the network device may be an evolved base station (evolutional node B, eNB or eNodeB) in an LTE system, or a next generation (NG) radio access network (RAN) device, or a base station (gNB) in an NR system, or a wireless controller in a cloud radio access network (CRAN). Alternatively, the network device may be a relay station, an access point, a vehicle-mounted device, a wearable device, a hub, a switch, a bridge, a router, a network device in a future evolved PLMN, or the like.

To facilitate the understanding of the technical solutions of the embodiments of the present disclosure, the following related technologies of the embodiments of the present disclosure are described below. The following related technologies as optional solutions can be arbitrarily combined with the technical solutions of the embodiments of the present disclosure, all of which fall within the scope of protection of the embodiments of the present disclosure.

Zero-power communication is a key technology utilizing radio frequency power harvesting, back scattering, and low-power computing, and the like. Zero-power communication is characterized in that radio waves in space can be harvested to obtain power, so as to drive zero-power terminal devices to work. Moreover, zero-power communication may further employ back scattering and low-power computing technologies, enabling zero-power terminal devices to achieve highly simplified radio frequency and baseband circuit architectures. In brief, it is expected to achieve battery-free terminal devices that meet ultra-low power consumption, miniature size, and ultra-low cost requirements for IoT (Internet of Things) communication, thereby greatly reducing terminal costs, a size, and circuit power consumption of the terminal devices.

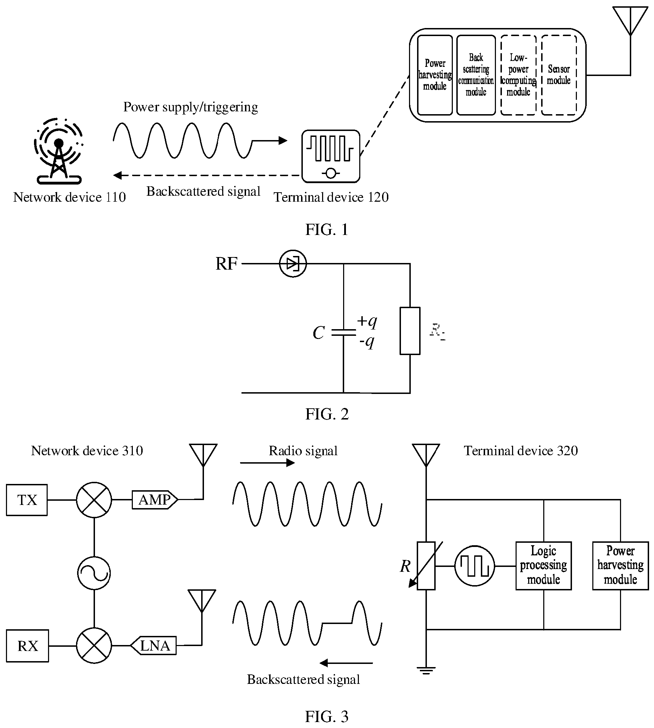

FIG. 1 is a schematic diagram of a scenario of a zero-power communication network. As illustrated in FIG. 1, the zero-power communication network may include a network device 110 and a terminal device 120, and the terminal device 120 is a zero-power device. The network device 110 may transmit a radio power supply signal and a downlink communication signal (i.e., power supply/triggering) to the terminal device 120. After receiving the radio power supply signal and the downlink communication signal from the network device 110, the terminal device 120 may transmit a backscattered signal to the network device 110. A basic zero-power terminal device 120 may include a power harvesting module, a back scattering communication module, and a low-power computing module. In addition, the zero-power terminal device 120 may further include a sensor module configured to store some basic information (e.g., an item identity) or obtain sensing data such as an ambient temperature and ambient humidity. By way of example, the sensor module may be a memory or a sensor.

In a zero-power communication process, the network device may transmit a radio power supply signal and a downlink communication signal to the zero-power terminal device, and the zero-power terminal device may also transmit a backscattered signal to the network device. Therefore, the key of the zero-power communication lies in radio frequency (RF) power harvesting and back scattering communication. The RF power harvesting and the back scattering communication will be described below with reference to FIG. 2 and FIG. 3, respectively.

FIG. 2 is a schematic diagram of a circuit structure of a radio frequency power harvesting (RF Power Harvesting) module. As illustrated in FIG. 2, the RF power harvesting module may include a tunnel diode, a capacitor C (including a positive electrode +q and a negative electrode -q), and a resistor RL, where an RF signal may undergo a radio frequency power harvesting process through the tunnel diode. By way of example, the RF power harvesting module may harvest power of spatial electromagnetic waves on the basis of the principle of electromagnetic induction, and then obtains power required for driving a zero-power terminal device to work, for example, the power may drive a low-power demodulation and modulation module, a sensor, and memory read. Thus, the zero-power terminal device does not require a conventional battery.

FIG. 3 is a schematic diagram of a circuit structure of back scattering communication. As illustrated in FIG. 3, the back scattering communication may include a network device 310 and a terminal device 320, and the terminal device 320 is a zero-power device. The network device 310 may include a transmitter (TX), an operational amplifier (AMP), a receiver (RX), and a low noise amplifier (LNA). The terminal device 320 may include a resistor R, a logic processing module, and a power harvesting module. The terminal device 320 may receive a radio signal from the network device 310, modulate the radio signal to load information that needs to be transmitted, radiate the modulated radio signal (i.e., backscattered signal) from an antenna, and this information transmission process is referred to as back scattering communication.

In the embodiments of the present disclosure, back scattering and load modulation functions are inseparable. Load modulation is to adjust and control circuit parameters of an oscillation loop of the zero-power terminal device in accordance with a beat of a data stream, so that the parameters such as the impedance of an electronic tag change accordingly, thereby completing the modulation process. The load modulation mainly includes two manners, namely, resistive load modulation and capacitive load modulation.

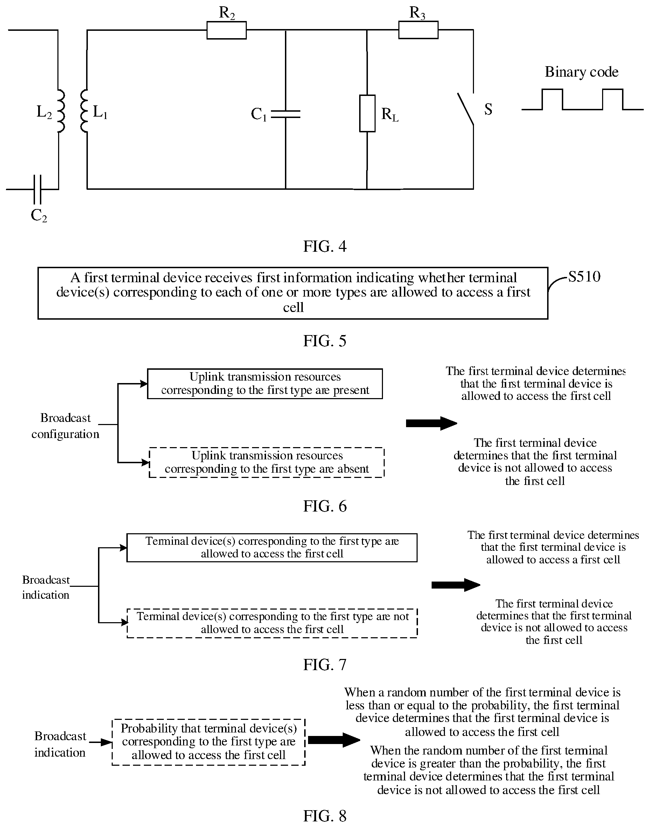

FIG. 4 is a schematic diagram of a circuit structure of resistive load modulation. As illustrated in FIG. 4, the circuit structure may include an inductor L1 and an inductor L2, a capacitor C1 and a capacitor C2, a resistor R2, a resistor R3, and a load RL. In the resistive load modulation, the load RL is connected in parallel with the resistor R3, and a switch S can be controlled to be turned on or off based on a binary data stream (i.e., binary code), thereby controlling connecting or disconnecting the resistor R3. Connecting or disconnecting the resistor R3 will cause a change in circuit voltage, thereby realizing amplitude shift keying (ASK) modulation. That is, signal modulation and transmission may be realized by adjusting the amplitude of the backscattered signal of the zero-power terminal device.

Similarly, in the capacitive load modulation, a change in the resonant frequency of a circuit can be realized by connecting or disconnecting a capacitor, thereby realizing frequency shift keying (FSK) modulation, That is, signal modulation and transmission may be realized by adjusting the operating frequency of the backscattered signal of the zero-power terminal device.

It should be noted that the zero-power terminal device may perform information modulation on an incoming signal by means of load modulation, thereby implementing the back scattering communication process. The zero-power terminal device mainly has the following advantages.
(1) The zero-power terminal device does not actively transmit signals, and therefore does not require complex RF links, such as a power amplifier (PA), an RF filter.
(2) The zero-power terminal device does not need to actively generate a high-frequency signal, and therefore does not require a high-frequency crystal oscillator.
(3) The zero-power terminal device can transmit signals without consuming its own power by means of back scattering communication.

It should be further noted that, based on current discussions within the 3rd generation partnership project (3GPP), zero-power terminal devices may be classified into the following three types based on whether the zero-power terminal devices possess a power storage capability and have an independent RF signal generation capability for transmission of RF signals.
(1) Zero-power terminal devices neither have a power storage capability nor a capability to independently generate RF signals and amplify the RF signals, where transmission of the RF signals depends on back scattering.
(2) Zero-power terminal devices have a power storage capability, but do not have a capability to independently generate RF signals, where transmission of the RF signals depends on back scattering, and the power stored in the zero-power terminal device may be used to amplify the RF signals.
(3) Zero-power terminal devices have a power storage capability and a capability to independently generate RF signals. In other words, in this case, the zero-power terminal device may actively transmit RF signals, and the power stored in the zero-power terminal device may be used to amplify the RF signals.

In the present embodiment of the present disclosure, the terminal device, when accessing a cell, mainly involves two mechanisms: an NR Cellbarred mechanism and an NR unified access control (UAC) mechanism. Relevant explanations for the two mechanisms are provided below.

### (1) NR Cellbarred Mechanism

In an initial access phase, the terminal device may read a master information block (MIB) after obtaining time-frequency domain synchronization. The MIB mainly includes the following two parameters related to cell selection and/or reselection.

Cellbarred: configured to indicate whether access to a current cell is barred for all terminal devices. When the Cellbarred is set to Barred, terminal devices in radio resource control (RRC) idle state (IDLE) and RRC inactive state (INACITVE) cannot access the cell.

IntraFreqReselection: configured to indicate whether the terminal device is allowed to select and/or reselect to a suboptimal cell on the current frequency when the current cell is an optimal cell on the current frequency and the current cell bars access for the terminal device. In other words, the IntraFreqReselection may be configured to indicate whether the terminal device is allowed to access an intra-frequency cell of the current cell when the current cell bars access for the terminal device.

### (2) NR UAC mechanism

For load control on a network device side, a UAC mechanism is introduced into the NR. In the UAC mechanism, Access Identity and Access Category are defined.

The Access Identity may represent an identity feature of the terminal device itself. The definition of the Access Identity is given in the protocol TS24.501, and will not be repeated here.

The Access Category may represent a service attribute of a call initiated by the terminal device. Access Categories mainly include standardized access categories, operator-defined access categories, and other undefined access categories.

The RAN may broadcast access control information related to the access category and the access identity, and an access stratum (AS) of the terminal device may perform access barring check (ABC) Checking based on the broadcast access control information together with the access category and the access identity that are provided by the AS/a non-access stratum (NAS).

The UAC parameter may be configured Per access category and Per PLMN.

A maximum of eight UAC-BarringInfoSets may be configured on the network device side, and each UAC-BarringInfoSet may include the following parameters.
UAC-BarringFactor: mainly indicates a probability that the terminal device is allowed to pass when attempting to access the current cell;
UAC-BarringTime: may be configured to determine a minimum time interval between a failed access attempt initiated by a terminal device of a certain access category and a next access attempt re-initiated by a terminal device of the same access category.

UAC-BarringForAccessIdentity: may be configured to indicate whether access attempts are allowed for each access identity.

Each access category may be associated with one UAC-BarringInfoSet, and there are 64 access categories in total. This configuration may be performed Per PLMN, with each PLMN being associated with one UAC-BarringPerCatList. If no Per PLMN information is configured, the above configuration may apply to all PLMNs.

Based on the foregoing UAC configuration parameters, a process in which the terminal device performs ABC Checking may include the following operations.

Operation 1: when neither a timer T390 nor a timer T302 runs and the access category is not 0, operation 2 may be performed based on the UAC configuration information.

Operation 2: if a bit corresponding to the access identity in the UAC-BarringForAccessIdentity is set to 0, it indicates that the terminal device is allowed to access the current cell; and if a bit corresponding to the access identity in the UAC-BarringForAccessIdentity is set to 1, further determination is required, and operation 3 is performed.

Operation 3: the terminal device generates a random number (rand), where 0 ≤ rand < 1. When the random number is less than or equal to the BarringFactor, the current cell allows access for the terminal device; and when the random number is greater than the BarringFactor, the current cell bars access for the terminal device. When the current cell bars access for the terminal device, the terminal device may generate a rand again, start T390, and calculate T390 = (0.7+ 0.6* rand) * UAC-BarringTime, so that a value of T390 obtained by the terminal device varies with different random numbers generated by the terminal device.

For an event triggered by the NAS, the NAS may determine an access identity, an access category, and a cause value. The NAS may provide the access identity and the access category to the AS, and the AS may be responsible for ABC Checking. After completing the ABC Checking, the AS may feed back a result of the ABC Checking to the NAS, and then the NAS provides the cause value to the AS. Based on the result of the ABC Checking fed back by the AS, the NAS may be responsible for performing stopping or allowing the transmission of services.

For an event triggered by the AS, information exchanged between the NAS and the AS belongs to an implementation behavior of the terminal device. The event triggered by the AS may mainly include a paging trigger and a RAN-based notification area update (RNAU) trigger.

Paging trigger: when the access category is 0, the access of the terminal device may not be controlled by the ABC, and a cause value can be overridden. During interaction between the NAS and the AS, the NAS may provide the cause value.

RNAU trigger: the AS may determine an access category, the NAS may provide an access identity to the AS, and the ABC Checking may be performed by the AS. The AS may further determine a cause value, for example, the AS may determine the cause value as RNAU.

In the related art, with the continuous development of communication technologies, a terminal device used by a user needs to access a serving cell, so that various tasks can be handled using network resources. However, at present, the network device controls access of all terminal devices based on one set of parameters, which is not conducive to more flexible control over access of the terminal devices by the network device, and further reduces utilization of network resources.

On that basis, an embodiment of the present disclosure provides a communication method including that a first terminal device may receive first information from a network device, here, the first information is used to indicate whether terminal device(s) corresponding to each of one or more types are allowed to access a first cell. In this way, after receiving the first information, the first terminal device may learn of whether the terminal device(s) corresponding to each type are allowed to access the first cell. In other words, after receiving the first information, the first terminal device may learn of the type of the terminal device that is allowed to access the first cell and the type of the terminal device that is not allowed to access the first cell. As such, the first terminal device may subsequently determine, based on the first information, whether the first terminal device is allowed to access the first cell, thereby enabling the network device to more flexibly control access of the first terminal device while improving utilization of network resources.

To facilitate understanding of the technical solutions of the embodiments of the present disclosure, the technical solutions of the present disclosure will be described in detail below by means of specific embodiments. The above related techniques as optional solutions can be arbitrarily combined with the technical solutions of the embodiments of the present disclosure, all of which fall within the scope of protection of the embodiments of the present disclosure. The embodiments of the present disclosure include at least some of the following contents.

FIG. 5 is a schematic flowchart of a communication method according to an embodiment of the present disclosure. As illustrated in FIG. 5, the method may include the following operations.

S510: a first terminal device receives first information, here, the first information is used to indicate whether terminal device(s) corresponding to each of one or more types are allowed to access a first cell.

Correspondingly, a network device may transmit the first information.

It should be noted that the network device may transmit the first information in a broadcast manner, or may transmit the first information in other manners. The first terminal device may receive the first information transmitted in the broadcast manner, or may receive the first information transmitted in other manners, which is not limited in the embodiments of the present disclosure.

It should be further noted that the network device may transmit the first information to the first terminal device, or may transmit the first information to a terminal device other than the first terminal device, which is not limited in the embodiments of the present disclosure.

It should be further noted that the first cell may be a cell served by the network device.

In some embodiments, whether the terminal device(s) corresponding to each of one or more types are allowed to access the first cell may include: terminal device(s) corresponding to a part of the one or more types are allowed to access the first cell, and terminal device(s) corresponding to the other part of the one or more types are not allowed to access the first cell.

It should be noted that, after receiving the first information, the first terminal device may learn of the type of the terminal device that is allowed to access the first cell and the type of the terminal device that is not allowed to access the first cell.

Further, when the type of the first terminal device is a first type, after receiving the first information, the first terminal device may learn of whether the terminal device(s) corresponding to the first type are allowed to access the first cell, so that the first terminal device can learn of whether the first terminal device is allowed to access the first cell.

It should be further noted that there is an association relationship between whether the terminal device is allowed to access the first cell and the type of the terminal device. The network device may classify the terminal devices based on the types of the terminal devices, so that terminal devices corresponding to a part of the types are allowed to access the first cell, and terminal devices corresponding to the other part of the types are not allowed to access the first cell.

It should be further noted that, there may be one or more terminal devices corresponding to each type, which is not limited in the embodiments of the present disclosure.

In some embodiments, the type of the terminal device may include a device type of the terminal device and/or a service type of the terminal device.

According to the method, after receiving the first information from the network device, the first terminal device may learn of the device type and/or the service type of the terminal device that is allowed to access the first cell and the device type and/or the service type of the terminal device that is not allowed to access the first cell. In this way, the first terminal device may subsequently determine, based on the first information, whether the first terminal device is allowed to access the first cell, thereby enabling the network device to more flexibly control access of the first terminal device while improving utilization of network resources.

It should be noted that the device type of the terminal device may be determined based on a capability supported by the terminal device.

Further, the device type of the terminal device may be determined based on one or more of the following: whether the terminal device is a zero-power device; whether the terminal device is capable of independently generating an RF signal when the terminal device is the zero-power device; and whether the terminal device is capable of storing power when the terminal device is the zero-power device.

By way of example, the device type of the terminal device may be determined based on one or more of the following: the terminal device is not a zero-power device; the terminal device is a zero-power device; the terminal device is capable of independently generating an RF signal when the terminal device is the zero-power device; the terminal device is incapable of independently generating an RF signal when the terminal device is the zero-power device; the terminal device is capable of storing power when the terminal device is the zero-power device; and the terminal device is incapable of storing power when the terminal device is the zero-power device.

It should be noted that, when the terminal device is the zero-power device, whether the terminal device is capable of independently generating the RF signal and whether the terminal device is capable of storing the power may be combined with each other. For example, when the terminal device is a zero-power device, the terminal device is capable of independently generating an RF signal, but incapable of storing power. For another example, when the terminal device is a zero-power device, the terminal device is capable of independently generating an RF signal, and is capable of storing power. For another example, when the terminal device is a zero-power device, the terminal device is incapable of independently generating an RF signal, but capable of storing power. For another example, when the terminal device is a zero-power device, the terminal device is incapable of independently generating an RF signal and is incapable of storing power.

Further, the service type of the terminal device represents a service category supported by the terminal device.

It should be noted that the service type of the terminal device may change in real time based on a service that needs to be performed by the terminal device currently.

In some embodiments, the service types of the terminal device may be classified into a latency-sensitive service and a latency-insensitive service based on different latency requirements of the service types.

By way of example, the service types of the terminal device may be classified into a control type, a collection type, and an extension type.

For example, control-type services may include at least one of: distribution automation, precise load control, or load control.

For another example, a collection-type service may be electricity consumption information collection.

For another example, extension-type services may include a video surveillance service and/or a voice service.

The precise load control may be a latency-sensitive service, and the electricity consumption information collection may be a latency-insensitive service.

It should be noted that, in addition to performing classification based on the latency requirements of the service types, more service types of the terminal devices may be classified based on other criteria, which is not limited in the embodiments of the present disclosure.

The embodiment of the present disclosure provides a communication method, in which a first terminal device may receive, from a network device, first information for indicating whether terminal device(s) corresponding to each of one or more types are allowed to access a first cell. In this way, after receiving the first information, the first terminal device may learn of whether the terminal device(s) corresponding to each type are allowed to access the first cell. In other words, after receiving the first information, the first terminal device may learn of the type of the terminal device that is allowed to access the first cell and the type of the terminal device that is not allowed to access the first cell. As such, the first terminal device may subsequently determine, based on the first information, whether the first terminal device is allowed to access the first cell, thereby enabling the network device to more flexibly control access of the first terminal device while improving utilization of network resources.

In a cellular system, since terminal devices of different types support different capabilities or perform signal transmission based on different signal waveforms, for example, the transmission signal waveform of conventional NR terminal devices is based on orthogonal frequency division multiplexing (OFDM), while that of zero-power terminal devices is based on on-off keying (OOK), if coexistence of two types of terminal devices (i.e., the conventional NR terminal device and the zero-power terminal device) needs to be supported, uplink transmission resources of the two types of terminal devices need to be distinguished.

Further, some zero-power terminal devices do not have a capability to independently generate RF signals, RF signal transmission by such zero-power terminal devices can only depend on back scattering, and uplink transmission of such zero-power terminal devices needs to be triggered by downlink signals. In this case, the network device needs to configure, for such zero-power terminal devices, uplink transmission resources used for back scattering. While some zero-power terminal devices are capable of independently generating RF signals, and such zero-power terminal devices actively initiate uplink transmission. In this case, the network device needs to configure active uplink transmission resources for such zero-power terminal devices, for example, physical random access channel (PRACH) resources, or for another example, physical uplink shared channel (PUSCH) resources.

At present, in some scenarios, the network device may configure uplink transmission resources for some types of terminal devices, while not configuring uplink transmission resources for other types of terminal devices; or, in a period of time, uplink transmission resources allocated by the network device for a specific type of terminal devices experience a heavier load (e.g., multiple terminal devices use the same uplink transmission resources, resulting in a higher probability of conflicts).

In the embodiments of the present disclosure, when terminal devices of different types coexist, configuration requirements for uplink transmission resources are different for the terminal devices of different types, such that the network device may separately configure uplink transmission resources for terminal devices of different types. In other words, for different types of terminal devices, the network device may configure uplink transmission resource pools respectively corresponding to the types.

Based on S510, when the first information is used to indicate whether the terminal device(s) corresponding to each of the one or more types are allowed to access the first cell, the first information may include configuration information, and the network device may configure uplink transmission resources corresponding to part of the one or more types using the configuration information, so that the configuration information can be used to implicitly indicate whether the terminal device(s) corresponding to each of the one or more types are allowed to access the first cell.

In addition, when the first information is used to indicate whether the terminal device(s) corresponding to each of the one or more types are allowed to access the first cell, the first information may further include indication information, and the network device may further indicate other information using the indication information, so that the indication information can be used to explicitly/implicitly indicate whether the terminal device(s) corresponding to each of the one or more types are allowed to access the first cell.

Based on this, in some embodiments, the first information may include one or more of the following: configuration information for configuring uplink transmission resources corresponding to part of the one or more types; first indication information for indicating whether the terminal device(s) corresponding to each of the one or more types are allowed to access the first cell; second indication information for indicating a probability that the terminal device(s) corresponding to each of the one or more types are allowed to access the first cell; third indication information for indicating whether terminal device(s) corresponding to part of the one or more types are allowed to access an intra-frequency cell of the first cell when the terminal device(s) corresponding to the part of the one or more types are not allowed to access the first cell; and fourth indication information for indicating a minimum time interval starting from a current moment when terminal device(s) corresponding to part of the one or more types fail in an attempt to access the first cell at the current moment, wherein after the minimum time interval, the terminal device(s) corresponding to the part of the one or more types are allowed to make a next attempt to access the first cell.

By way of example, the uplink transmission resources corresponding to the type of the terminal device may be configured by the network device.

By way of example, the probability may be configured by the network device, or predefined by a protocol, or set in other means, which is not limited in the embodiments of the present disclosure.

By way of example, the minimum time interval may be configured by the network device, or predefined by a protocol, or set in other means, which is not limited in the embodiments of the present disclosure.

It should be noted that the indication information (e.g., the first indication information) may indicate the foregoing information using a bit indication field.

As an example, when the first indication information indicates whether the terminal device(s) corresponding to each of the one or more types are allowed to access the first cell, if terminal device(s) corresponding to a part of the one or more types are allowed to access the first cell, a Barred bit indication field corresponding to each type among the part of the one or more types may be set to 0; or, if terminal device(s) corresponding to the other part of the one or more types are not allowed to access the first cell, a Barred bit indication field corresponding to each type among the other part of the one or more types may be set to 1.

It should be further noted that, when the network device explicitly/implicitly indicates, through the first information, whether the terminal device(s) corresponding to each of the one or more types are allowed to access the first cell, one piece of information in the first information may be used, or multiple pieces of information in the first information may be used, which is not limited in the embodiments of the present disclosure.

By way of example, the first information may include the configuration information.

By way of example, the first information may include the first indication information and the second indication information.

In some embodiments, whether the first terminal device is allowed to access the first cell is determined based on the first information and a first type of the first terminal device, where the first type is one of the one or more types.

It should be noted that, when the first type is one of the one or more types, terminal device(s) corresponding to the first type may be one or more of terminal devices corresponding to the one or more types. For example, the first terminal device corresponding to the first type may be one of the terminal devices corresponding to the one or more types.

By way of example, there may be one terminal device corresponding to the first type. For example, the terminal device corresponding to the first type is the first terminal device.

By way of example, there may be multiple terminal devices corresponding to the first type. For example, the terminal devices corresponding to the first type may further include another terminal device in addition to the first terminal device, which is not limited in the embodiments of the present disclosure.

In some embodiments, the first type of the first terminal device may include a device type of the first terminal device and/or a service type of the first terminal device.

It should be noted that the device type of the first terminal device may be determined based on a capability supported by the first terminal device.

Further, the device type of the first terminal device may be determined based on one or more of the following: whether the first terminal device is a zero-power device; whether the first terminal device is capable of independently generating an RF signal when the first terminal device is the zero-power device; and whether the first terminal device is capable of storing power when the first terminal device is the zero-power device.

By way of example, the device type of the first terminal device may be determined based on one or more of the following: the first terminal device is not a zero-power device; the first terminal device is a zero-power device; the first terminal device is capable of independently generating an RF signal when the first terminal device is the zero-power device; the first terminal device is incapable of independently generating an RF signal when the first terminal device is the zero-power device; the first terminal device is capable of storing power when the first terminal device is the zero-power device; and the first terminal device is incapable of storing power when the first terminal device is the zero-power device.

It should be noted that, when the first terminal device is the zero-power device, whether the first terminal device is capable of independently generating the RF signal and whether the first terminal device is capable of storing the power may be combined with each other. For example, when the first terminal device is a zero-power device, the first terminal device is capable of independently generating an RF signal, but incapable of storing power. For another example, when the first terminal device is a zero-power device, the first terminal device is capable of not only independently generating an RF signal, but also storing power. For another example, when the first terminal device is a zero-power device, the first terminal device is incapable of independently generating an RF signal, but capable of storing power. For another example, when the first terminal device is a zero-power device, the first terminal device is incapable of independently generating an RF signal and storing power.

Further, the service type of the first terminal device represents a service category supported by the first terminal device.

It should be noted that the service type of the first terminal device may change in real time based on a service that needs to be performed by the first terminal device currently.

In some embodiments, the service types of the first terminal device may be classified into a latency-sensitive service and a latency-insensitive service based on different latency requirements of the service types.

By way of example, the service types of the first terminal device may be classified into a control type, a collection type, and an extension type.

For example, control-type services may include at least one of: distribution automation, precise load control, or load control.

For another example, a collection-type service may be electricity consumption information collection.

For another example, extension-type services may include a video surveillance service and/or a voice service.

The precise load control may be a latency-sensitive service, and the electricity consumption information collection may be a latency-insensitive service.

It should be noted that, in addition to performing classification based on the latency requirements of the service type, more service types of the first terminal devices may be classified based on other criteria, which is not limited in the embodiments of the present disclosure.

According to the method, whether the first terminal device is allowed to access the first cell may be determined based on the first information and the first type of the first terminal device. In this way, the network device can control access of the first terminal device more flexibly, and utilization of network resources is also improved.

In the embodiments of the present disclosure, the first terminal device may determine, based on the first information and the first type of the first terminal device, whether the first terminal device is allowed to access the first cell in the following several manners.

Manner #A: When the first information includes the configuration information, and the configuration information configures uplink transmission resources corresponding to part of the one or more types, the first terminal device may determine, based on whether the configuration information configures uplink transmission resources corresponding to the first type, whether the first terminal device is allowed to access the first cell.

It should be noted that the configuration information configures the uplink transmission resources corresponding to the first type, which may be understood as the configuration information implicitly indicating whether the first terminal device is allowed to access the first cell.

In other words, in some embodiments, when the configuration information configures uplink transmission resources corresponding to the first type, the first terminal device may determine that the first terminal device is allowed to access the first cell; or, when the configuration information does not configure uplink transmission resources corresponding to the first type, the first terminal device may determine that the first terminal device is not allowed to access the first cell.

By way of example, FIG. 6 is a first schematic diagram of a scenario in which a first terminal device determines whether the first terminal device is allowed to access a first cell according to an embodiment of the present disclosure. As illustrated in FIG. 6, when uplink transmission resources corresponding to the first type are present in a broadcast configuration of the network device, the first terminal device may determine that the first terminal device is allowed to access the first cell; or, when uplink transmission resources corresponding to the first type are absent in the broadcast configuration of the network device, the first terminal device may determine that the first terminal device is not allowed to access the first cell.

According to the method, when first information includes configuration information, and the configuration information configures uplink transmission resources corresponding to the first type, the first terminal device may determine that the first terminal device is allowed to access the first cell; or, when the configuration information does not configure uplink transmission resources corresponding to the first type, the first terminal device may determine that the first terminal device is not allowed to access the first cell. In this way, the network device can control access of the first terminal device more flexibly, and utilization of network resources is also improved.

Manner #B: When the first information includes first indication information, and the first indication information indicates whether terminal device(s) corresponding to the first type are allowed to access the first cell, the first terminal device may determine whether the first terminal device is allowed to access the first cell.

It should be noted that the first indication information indicates whether the terminal device(s) corresponding to the first type are allowed to access the first cell, which may be understood as the first indication information explicitly indicating whether the first terminal device is allowed to access the first cell.

In other words, in some embodiments, when the first indication information indicates that the terminal device(s) corresponding to the first type are allowed to access the first cell, the first terminal device may determine that the first terminal device is allowed to access the first cell, or, when the first indication information indicates that the terminal device(s) corresponding to the first type are not allowed to access the first cell, the first terminal device may determine that the first terminal device is not allowed to access the first cell.

By way of example, FIG. 7 is a second schematic diagram of a scenario in which a first terminal device determines whether the first terminal device is allowed to access a first cell according to an embodiment of the present disclosure. As illustrated in FIG. 7, when the network device broadcasts an indication that terminal device(s) corresponding to the first type are allowed to access the first cell, the first terminal device may determine that the first terminal device is allowed to access the first cell; or, when the network device broadcasts an indication that terminal device(s) corresponding to the first type are not allowed to access the first cell, the first terminal device may determine that the first terminal device is not allowed to access the first cell.

According to the method, when the first information includes first indication information, and the first indication information indicates that terminal device(s) corresponding to the first type are allowed to access the first cell, the first terminal device may determine that the first terminal device is allowed to access the first cell; or, when the first indication information indicates that terminal device(s) corresponding to the first type are not allowed to access the first cell, the first terminal device may determine that the first terminal device is not allowed to access the first cell. In this way, the network device can control access of the first terminal device more flexibly, and utilization of network resources is also improved.

Manner #C: When the first information includes second indication information, and the second indication information indicates a probability that terminal device(s) corresponding to the first type are allowed to access the first cell, the first terminal device may determine, based on the probability that the terminal device(s) corresponding to the first type are allowed to access the first cell, whether the first terminal device is allowed to access the first cell.

It should be noted that the second indication information indicates the probability that the terminal device(s) corresponding to the first type are allowed to access the first cell, which may be understood as the first information implicitly indicating whether the first terminal device is allowed to access the first cell.

In other words, in some embodiments, the second indication information indicates the probability that the terminal device(s) corresponding to the first type are allowed to access the first cell; and the method may further include: when a random number of the first terminal device is less than or equal to the probability, the first terminal device determines that the first terminal device is allowed to access the first cell; or, when a random number of the first terminal device is greater than the probability, the first terminal device determines that the first terminal device is not allowed to access the first cell.

It should be noted that the random number of the first terminal device may be generated by the first terminal device.

By way of example, the random number of the first terminal device ranges from 0 to 1.

By way of example, FIG. 8 is a third schematic diagram of a scenario in which a first terminal device determines whether the first terminal device is allowed to access a first cell according to an embodiment of the present disclosure. As illustrated in FIG. 8, when the network device broadcasts an indication of a probability that terminal device(s) corresponding to the first type are allowed to access the first cell, if a random number of the first terminal device is less than or equal to the probability, the first terminal device determines that the first terminal device is allowed to access the first cell; or, if the random number of the first terminal device is greater than the probability, the first terminal device determines that the first terminal device is not allowed to access the first cell.

According to the method, when the first information includes second indication information, and the second indication information indicates a probability that terminal device(s) corresponding to the first type are allowed to access the first cell, the first terminal device may compare the random number with the probability, so that the first terminal device may determine whether the first terminal device is allowed to access the first cell. In this way, the network device can control access of the first terminal device more flexibly, and utilization of network resources is also improved.

Manner #D: When the first information includes third indication information, and the third indication information indicates that terminal device(s) corresponding to the first type are not allowed to access the first cell, the first terminal device may determine that the first terminal device is not allowed to access the first cell.

In addition, when the third indication information further indicates whether the terminal device(s) corresponding to the first type are allowed to access an intra-frequency cell of the first cell, the first terminal device may determine whether the first terminal device is allowed to access the intra-frequency cell of the first cell.

It should be noted that the third indication information indicates that the terminal device(s) corresponding to the first type are not allowed to access the first cell, which may be understood as the third indication information explicitly indicating that the first terminal device is not allowed to access the first cell.

It should be further noted that the third indication information further indicates whether the terminal device(s) corresponding to the first type are allowed to access the intra-frequency cell of the first cell, which may be understood as the third indication information further explicitly indicating whether the first terminal device is allowed to access the intra-frequency cell of the first cell.

In other words, in some embodiments, when the third indication information indicates that the terminal device(s) corresponding to the first type are not allowed to access the first cell and are allowed to access the intra-frequency cell of the first cell, the first terminal device determines that the first terminal device is not allowed to access the first cell and is allowed to access the intra-frequency cell of the first cell; or, when the third indication information indicates that the terminal device(s) corresponding to the first type are not allowed to access the first cell and are not allowed to access the intra-frequency cell of the first cell, the first terminal device determines that the first terminal device is not allowed to access the first cell and is not allowed to access the intra-frequency cell of the first cell.

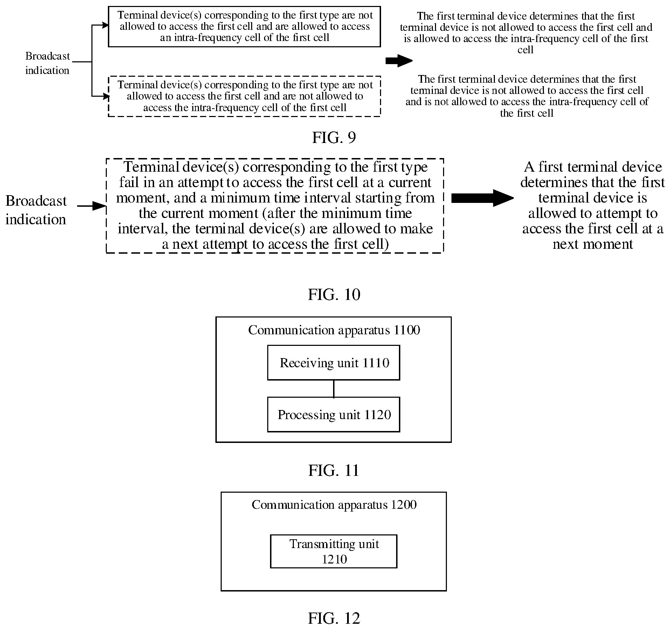

By way of example, FIG. 9 is a fourth schematic diagram of a scenario in which a first terminal device determines whether the first terminal device is allowed to access a first cell. As illustrated in FIG. 9, when the network device broadcasts an indication that terminal device(s) corresponding to the first type are not allowed to access the first cell and are allowed to access an intra-frequency cell of the first cell, the first terminal device may determine that the first terminal device is not allowed to access the first cell and is allowed to access the intra-frequency cell of the first cell; when the network device broadcasts an indication that terminal device(s) corresponding to the first type are not allowed to access the first cell and are not allowed to access the intra-frequency cell of the first cell, the first terminal device may determine that the first terminal device is not allowed to access the first cell and is not allowed to access the intra-frequency cell of the first cell.

It should be noted that, in the embodiments of the present disclosure, the third indication information indicates that the terminal device(s) corresponding to the first type are not allowed to access the first cell and indicates whether the terminal device(s) corresponding to the first type are allowed to access the intra-frequency cell of the first cell, which may be understood as the third indication information being capable of indicating whether the terminal device(s) corresponding to the first type are allowed to access a suboptimal cell on a current frequency when the first cell is an optimal cell on the current frequency and the terminal device(s) corresponding to the first type are not allowed to access the first cell.

According to the method, when the first information includes the third indication information, and the third indication information indicates that the terminal device(s) corresponding to the first type are not allowed to access the first cell and indicates whether the terminal device(s) corresponding to the first type are allowed to access the intra-frequency cell of the first cell, the first terminal device may determine that the first terminal device is not allowed to access the first cell and determine whether the first terminal device is allowed to access the intra-frequency cell of the first cell. In this way, the network device can control access of the first terminal device more flexibly, and utilization of network resources is also improved.

Manner #E: When the first information includes fourth indication information, and the fourth indication information indicates that terminal device(s) corresponding to the first type fail in an attempt to access the first cell at a current moment, the first terminal device may determine that the first terminal device fails in an attempt to access the first cell at the current moment.

In addition, when the fourth indication information further indicates a minimum time interval starting from the current moment, after which the terminal device(s) corresponding to the first type are allowed to make a next attempt to access the first cell, the first terminal device may determine a moment at which the first terminal device is allowed to make a next attempt to access the first cell.

It should be noted that the fourth indication information further indicates the minimum time interval starting from the current moment, after which the terminal device(s) corresponding to the first type are allowed to make the next attempt to access the first cell, which may be understood as the fourth indication information implicitly indicating the moment at which the first terminal device is allowed to make the next attempt to access the first cell.

In other words, in some embodiments, when the fourth indication information indicates that the terminal device(s) corresponding to the first type fail in the attempt to access the first cell at the current moment and indicates the minimum time interval starting from the current moment, after which the terminal device(s) corresponding to the first type are allowed to make the next attempt to access the first cell, the first terminal device may determine that the first terminal device is allowed to attempt to access the first cell at a next moment.

A difference between the next moment and the current moment is greater than the minimum time interval.

By way of example, FIG. 10 is a fifth schematic diagram of a scenario in which a first terminal device determines whether the first terminal device is allowed to access a first cell according to an embodiment of the present disclosure. As illustrated in FIG. 10, when the network device broadcasts an indication that terminal device(s) corresponding to the first type fail in an attempt to access the first cell at a current moment and an indication of a minimum time interval starting from the current moment, after which the terminal device(s) corresponding to the first type are allowed to make a next attempt to access the first cell, the first terminal device may determine that the first terminal device is allowed to attempt to access the first cell at a next moment.

According to the method, when the first information includes fourth indication information, and the fourth indication information indicates that the terminal device(s) corresponding to the first type fail in the attempt to access the first cell at the current moment and indicates the minimum time interval starting from the current moment, after which the terminal device(s) corresponding to the first type are allowed to make the next attempt to access the first cell, the first terminal device may determine the moment at which the first terminal device is allowed to attempt to access the first cell next time. In this way, the network device can control access of the first terminal device more flexibly, and utilization of network resources is also improved.

It should be noted that the first terminal device may determine, based on any one of Manner #A to Manner #E above, whether the first terminal device is allowed to access the first cell. It may be understood that the first terminal device may determine, based on multiple of Manner #A to Manner #E above, whether the first terminal device is allowed to access the first cell.

By way of example, the first terminal device may determine, based on Manner #A and Manner #B, whether the first terminal device is allowed to access the first cell. For example, when the configuration information configures the uplink transmission resources corresponding to the first type, and the first indication information indicates that the terminal device(s) corresponding to the first type are allowed to access the first cell, the first terminal device may determine that the first terminal device is allowed to access the first cell. For another example, when the configuration information does not configure the uplink transmission resources corresponding to the first type, and the first indication information indicates that the terminal device(s) corresponding to the first type are not allowed to access the first cell, the first terminal device may determine that the first terminal device is not allowed to access the first cell.

By way of example, the first terminal device may determine, based on Manner #B and Manner #C, whether the first terminal device is allowed to access the first cell. For example, when the first indication information indicates that the terminal device(s) corresponding to the first type are allowed to access the first cell, the first terminal device may determine that the first terminal device is allowed to access the first cell. For another example, when the first indication information does not indicate that the terminal device(s) corresponding to the first type are allowed to access the first cell, the second indication information may indicate the probability that the terminal device(s) corresponding to the first type are allowed to access the first cell: if a random number of the first terminal device is less than or equal to the probability, the first terminal device determines that the first terminal device is allowed to access the first cell; or, if the random number of the first terminal device is greater than the probability, the first terminal device determines that the first terminal device is not allowed to access the first cell.

It should be further noted that the network device may also transmit the first information to terminal device(s) other than the first terminal device, and in this case, the terminal device(s) may also determine, in one or more of Manner #A to Manner #E, whether the terminal device(s) are allowed to access the first cell. This is not repeated in the embodiments of the present disclosure.

The embodiments of the present disclosure provide a communication method, in which after receiving first information from a network device, a first terminal device may determine, based on the first information and a first type of the first terminal device, whether the first terminal device is allowed to access the first cell. In this way, the network device can control access of the first terminal device more flexibly, and utilization of network resources is also improved.

The communication method provided in the foregoing embodiments is described in detail below with reference to specific application scenarios.

In the embodiments of the present disclosure, a UE may determine, based on the following three possible implementations, whether the UE is allowed to access a current cell.

In a possible implementation, the UE may determine, based on whether uplink transmission resource configuration corresponding to a type of the UE is configured in a system message (i.e., configuration information), whether the UE is barred from accessing the current cell.

Correspondingly, an NW may implicitly indicate, based on whether the system message includes the uplink transmission resource configuration corresponding to the type of the UE, whether the UE is barred from accessing the current cell. The detailed implementation process is as follows.
(1) In a cellular system, since UEs of different types support different capabilities or perform signal transmission based on different signal waveforms, for example, the transmission signal waveform of regular NR UEs is based on orthogonal frequency division multiplexing (OFDM), while that of zero-power UEs is based on on-off keying (OOK), if coexistence of two types of UEs needs to be supported, uplink transmission resources of the two types of UEs need to be distinguished. For another example, some zero-power UEs do not have a capability to independently generate a radio frequency (RF) signal, RF signal transmission by such zero-power UEs can only depend on back scattering, and uplink transmission of such zero-power UEs needs to be triggered by downlink signals, so the NW needs to configure uplink transmission resources for back scattering for the zero-power UEs; while some zero-power UEs are capable of independently generating an RF signal, and such zero-power UEs can actively initiate uplink transmission, and the NW can configure active uplink transmission resources (such as PRACH resources, or PUSCH resources) for such zero-power UEs. Based on this, for the types of different UEs, the NW needs to configure, in the system message, uplink transmission resource pools respectively corresponding to the types.

It should be noted that the type of the UE may include a device type of the UE and/or a service type of the UE.

Further, the device type of the UE may be differentiated in one or more of the following manners: based on whether the UE is a zero-power device; when the UE is a zero-power device, based on whether the UE has a capability to independently generate an RF signal; or when the UE is a zero-power device, based on whether the UE has a power storage function.

(2) The UE may determine whether the UE is barred from accessing the current cell based on whether the uplink transmission resource corresponding to the type of the UE is broadcast: if the uplink transmission resource corresponding to the type of the UE is broadcast, the UE may determine that the UE is not barred from accessing the current cell, or, if the uplink transmission resource corresponding to the type of the UE is not broadcast, the UE may determine that the UE is barred from accessing the current cell.

In another possible implementation, the NW may introduce separate cellbarred parameters for types of different UEs, to explicitly indicate whether the UEs are barred from accessing the current cell. The detailed implementation process is as follows.
(1) The NW may indicate, in the system message, access-related information respectively for the types of different UEs. The access-related information may include one or more of the following parameters.

Cellbarred (i.e., the first indication information): configured to indicate whether the current cell is barred from access for a UE with a corresponding type.

IntraFreqReselection (i.e., the third indication information): configured to indicate, when the current cell is an optimal cell on a current frequency and camping on current cell is not allowed for the UE with the corresponding type, whether the UE with the corresponding type is allowed to select or reselect to a suboptimal cell on the current frequency.

That is, IntraFreqReselection may be configured to indicate whether the UE with the corresponding type is allowed to access a cell on the same frequency as the current cell when the UE with the corresponding type is not allowed to access the current cell.

It should be noted that the type of the UE may include a device type of the UE and/or a service type of the UE.

Further, the device type of the UE may be differentiated in one or more of the following manners: based on whether the UE is a zero-power device; when the UE is a zero-power device, based on whether the UE has a capability to independently generate an RF signal; or when the UE is a zero-power device, based on whether the UE has a power storage function.

(2) The UE determines whether the UE is barred from accessing the current cell based on a Cellbarred indication corresponding to the type of the UE.

When the Cellbarred indication corresponding to the type of the UE indicates that the current cell bars access for the UE of this type, the UE may determine, based on the IntraFreqReselection indication corresponding to the type of the UE, whether the UE is allowed to select or reselect to a suboptimal cell on the current frequency when the current cell is an optimal cell on the current frequency.

In another possible implementation, the NW may introduce separate UAC parameter configurations for types of different UEs, to indicate whether the UEs are barred from accessing the current cell. The detailed implementation process is as follows.
(1) The NW may broadcast, in a system message, UAC parameter configurations respectively for the types of different UEs. The UAC parameter configuration may include one or more of the following parameters.
   (i) UAC-BarringFactor (i.e., the second indication information): a probability that an access attempt initiated by a UE of each type is allowed to pass.
   (ii) UAC-BarringTime (i.e., the fourth indication information): a minimum time interval between a failed access attempt initiated by a UE of each type and a next access attempt re-initiated.
   (iii) UAC-Barring (i.e., the first indication information): an indication identity indicating whether a UE of each type is allowed to make access attempts.

It should be noted that the type of the UE may include a device type of the UE and/or a service type of the UE.

Further, the device type of the UE may be differentiated in one or more of the following manners: based on whether the UE is a zero-power device; when the UE is a zero-power device, based on whether the UE has a capability to independently generate an RF signal; or when the UE is a zero-power device, based on whether the UE has a power storage function.

(2) The UE performs ABC Checking based on the UAC parameter configuration corresponding to the type of the UE.

In the embodiments of the present disclosure, the technical solutions involved mainly include as follows.
- The NW introduces separate Cellbarred explicit indications for different types of UEs.
- The UE determines whether the UE is barred from accessing the current cell based on whether the uplink transmission resource configuration corresponding to the type of the UE exists in the system message. That is to say, the NW may implicitly indicate, based on whether the uplink transmission resource configuration corresponding to the type of the UE exists in the system message, whether the UE is barred from accessing the current cell.
- The NW introduces separate UAC parameter configurations for different types of UEs.

An embodiment of the present disclosure provides a method for controlling a UE to access an NW in a zero-power communication. According to the method, the NW uses different access control indications/parameters for types of different UEs, so that access of each type of UEs can be controlled more flexibly, and network resources can be better used.

Preferred embodiments of the present disclosure are described in detail above with reference to the drawings, but the present disclosure is not limited to specific details in said embodiments. Within the scope of the technical concept of the present disclosure, a variety of simple variations may be made to the technical solution of the present disclosure, and these simple variations all fall within the scope of protection of the present disclosure. For example, various specific technical features described in the above specific implementations may be combined by using any suitable means without contradictions. To avoid unnecessary repetition, the present disclosure no longer describes the various possible combinations. In another example, any combination of different implementations of the present disclosure may also be made, as long as the same does not violate the idea of the present disclosure, which should likewise be considered content disclosed in the present disclosure. For another example, insofar as there are no conflicts, the various embodiments described in the present disclosure and/or the technical features in the various embodiments may be arbitrarily combined with the related art, and the technical solutions obtained after the combination should also fall within the scope of protection of the present disclosure.

It should be understood that in various method embodiments of the present disclosure, the size of the sequence numbers of various processes described above does not imply the order of execution, and the order of execution of various processes should be determined by functions and internal logic thereof, and should not constitute any limitation on the implementation process of the embodiments of the present disclosure.

On the basis of the same inventive concept as the foregoing embodiments, FIG. 11 is a first schematic diagram of a compositional structure of a communication apparatus according to an embodiment of the present disclosure. The communication apparatus is applied to a first terminal device. As illustrated in FIG. 11, the communication apparatus 1100 may include a receiving unit 1110.

The receiving unit 1110 is configured to receive first information, here, the first information is used to indicate whether terminal device(s) corresponding to each of one or more types are allowed to access a first cell.

In some embodiments, the first information includes one or more of the following: configuration information for configuring whether uplink transmission resources corresponding to each of the one or more type are present; first indication information for indicating whether the terminal device(s) corresponding to each of the one or more types are allowed to access the first cell; second indication information for indicating a probability that the terminal device(s) corresponding to each of the one or more types are allowed to access the first cell; third indication information for indicating whether terminal device(s) corresponding to part of the one or more types are allowed to access an intra-frequency cell of the first cell when the terminal device(s) corresponding to the part of the one or more types are not allowed to access the first cell; and fourth indication information for indicating a minimum time interval starting from a current moment when terminal device(s) corresponding to part of the one or more types fail in an attempt to access the first cell at the current moment, here, after the minimum time interval, the terminal device(s) corresponding to the part of the one or more types are allowed to make a next attempt to access the first cell.

In some embodiments, whether the first terminal device is allowed to access the first cell is determined based on the first information and a first type of the first terminal device, here, the first type is one of the one or more types.

In some embodiments, the first information includes the configuration information. As illustrated in FIG. 11, the communication apparatus 1100 may include a processing unit 1120.

The processing unit 1120 is configured to determine that the first terminal device is allowed to access the first cell when the configuration information indicates configuration of uplink transmission resources corresponding to the first type; or, determine that the first terminal device is not allowed to access the first cell when the configuration information does not configure uplink transmission resources corresponding to the first type.

In some embodiments, the first information includes the first indication information, and the processing unit 1120 is further configured to, when the first indication information indicates that terminal device(s) corresponding to the first type are allowed to access the first cell, determine that the first terminal device is allowed to access the first cell; or, when the first indication information indicates that terminal device(s) corresponding to the first type are not allowed to access the first cell, determine that the first terminal device is not allowed to access the first cell.

In some embodiments, the first information includes the second indication information, the second indication information indicates a probability that terminal device(s) corresponding to the first type are allowed to access the first cell, and the processing unit 1120 is further configured to, when a random number of the first terminal device is less than or equal to the probability, determine that the first terminal device is allowed to access the first cell; or, when a random number of the first terminal device is greater than the probability, determine that the first terminal device is not allowed to access the first cell.

In some embodiments, the first information includes the third indication information, and the processing unit 1120 is further configured to, when the third indication information indicates that terminal device(s) corresponding to the first type are not allowed to access the first cell and are allowed to access the intra-frequency cell of the first cell, determine that the first terminal device is not allowed to access the first cell and is allowed to access the intra-frequency cell of the first cell; or, when the third indication information indicates that terminal device(s) corresponding to the first type are not allowed to access the first cell and are not allowed to access the intra-frequency cell of the first cell, determine that the first terminal device is not allowed to access the first cell and is not allowed to access the intra-frequency cell of the first cell.

In some embodiments, the first information includes the fourth indication information, and the processing unit 1120 is further configured to determine that the first terminal device is allowed to attempt to access the first cell at a next moment when the fourth indication information indicates that terminal device(s) corresponding to the first type fail in an attempt to access the first cell at the current moment and indicates the minimum time interval starting from the current moment, after which the terminal device(s) corresponding to the first type are allowed to make a next attempt to access the first cell. Here, a difference between the next moment and the current moment is greater than the minimum time interval.

In some embodiments, the type of the terminal device includes a device type of the terminal device and/or a service type of the terminal device.

In some embodiments, the device type of the terminal device is determined based on one or more of the following: whether the terminal device is a zero-power device; whether the terminal device is capable of independently generating an RF signal when the terminal device is the zero-power device; and whether the terminal device is capable of storing power when the terminal device is the zero-power device.

The embodiments of the present disclosure provide a communications apparatus, in which a first terminal device may receive first information from a network device, here, the first information is used to indicate whether terminal device(s) corresponding to each of one or more types are allowed to access a first cell. In this way, after receiving the first information, the first terminal device may learn of whether the terminal device(s) corresponding to each type are allowed to access the first cell. In other words, after receiving the first information, the first terminal device may learn of the type of the terminal device that is allowed to access the first cell and the type of the terminal device that is not allowed to access the first cell. As such, the first terminal device may subsequently determine, based on the first information, whether the first terminal device is allowed to access the first cell, thereby enabling the network device to more flexibly control access of the first terminal device while improving utilization of network resources.

It should be understood by a person skilled in the art that the relevant description of the above-described communication apparatus in the embodiments of the present disclosure may be understood with reference to the relevant description of the communication method in the embodiments of the present disclosure.

On the basis of the same inventive concept as the foregoing embodiments, FIG. 12 is a second schematic diagram of a compositional structure of a communication apparatus according to an embodiment of the present disclosure. The communication apparatus is applied to a network device. As illustrated in FIG. 12, the communication apparatus 1200 may include a transmitting unit 1210.

The transmitting unit 1210 is configured to transmit first information, here, the first information is used to indicate whether terminal device(s) corresponding to each of one or more types are allowed to access a first cell.

In some embodiments, the first information includes one or more of the following: configuration information for configuring whether uplink transmission resources corresponding to each of the one or more type are present; first indication information for indicating whether the terminal device(s) corresponding to each of the one or more types are allowed to access the first cell; second indication information for indicating a probability that the terminal device(s) corresponding to each of the one or more types are allowed to access the first cell; third indication information for indicating whether terminal device(s) corresponding to part of the one or more types are allowed to access an intra-frequency cell of the first cell when the terminal device(s) corresponding to the part of the one or more types are not allowed to access the first cell; and fourth indication information for indicating a minimum time interval starting from a current moment when terminal device(s) corresponding to part of the one or more types fail in an attempt to access the first cell at the current moment, here, after the minimum time interval, the terminal device(s) corresponding to the part of the one or more types are allowed to make a next attempt to access the first cell.

In some embodiments, the type of the terminal device includes a device type of the terminal device and/or a service type of the terminal device.

In some embodiments, the device type of the terminal device is determined based on one or more of the following: whether the terminal device is a zero-power device; whether the terminal device is capable of independently generating an RF signal when the terminal device is the zero-power device; and whether the terminal device is capable of storing power when the terminal device is the zero-power device.

The embodiments of the present disclosure provides a communications apparatus, in which a network device may transmit first information, here, the first information is used to indicate whether terminal device(s) corresponding to each of one or more types are allowed to access a first cell. In this way, the network device may notify the terminal device (e.g., the first terminal device) of the type of the terminal device that is allowed to access the first cell and the type of the terminal device that is not allowed to access the first cell. As such, the network device can control access of the terminal device more flexibly, and utilization of network resources is also improved.

It should be understood by a person skilled in the art that the relevant description of the above-described communication apparatus in the embodiments of the present disclosure may be understood with reference to the relevant description of the communication method in the embodiments of the present disclosure.

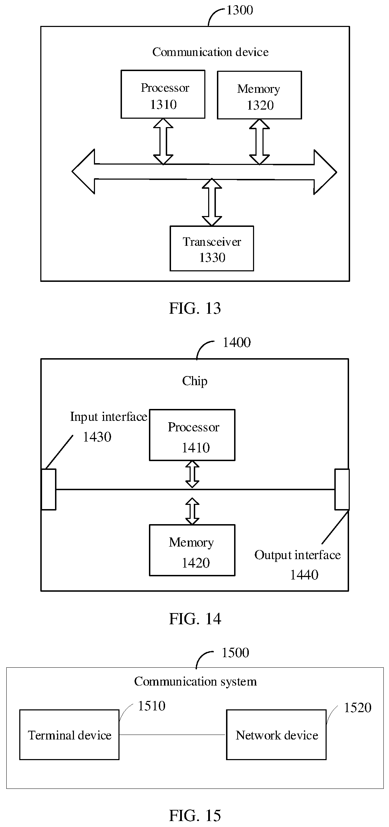

FIG. 13 is a schematic structural diagram of a communication device 1300 according to an embodiment of the present disclosure. As illustrated in FIG. 13, the communication device 1300 includes a processor 1310 and a memory 1320. The memory 1320 may store a computer program, and the processor 1310 may invoke and run the computer program from the memory 1320 to implement the methods in the embodiments of the present disclosure.

The memory 1320 may be a separate component independent of the processor 1310, or may be integrated in the processor 1310.

In some embodiments, as illustrated in FIG. 13, the communication device 1300 may further include a transceiver 1330. The processor 1310 may control the transceiver 1330 to perform communication with other devices. Specifically, the transceiver may transmit information or data to other devices, or receive information or data transmitted by other devices.

The transceiver 1330 may include a transmitter and a receiver. The transceiver 1330 may further include an antenna, and the number of antennas may be one or more.

In some embodiments, an embodiment of the present disclosure further provides compositions of another communication device, where the communication device may include the communication apparatus 1100 or the communication apparatus 1200 in any one of the foregoing embodiments.

In some embodiments, the communication device may be the first terminal device in the embodiments of the present disclosure, and the processor 1310 may invoke and run the computer program from the memory 1320 to implement the method implemented by the first terminal device in the embodiments of the present disclosure. For conciseness, further details are omitted here.

In some embodiments, the communication device may be the network device in the embodiments of the present disclosure, and the processor 1310 may invoke and run the computer program from the memory 1320 to implement the method implemented by the network device in the embodiments of the present disclosure. For conciseness, further details are omitted here.

FIG. 14 is a schematic structural diagram of a chip according to an embodiment of the present disclosure. As illustrated in FIG. 14, the chip 1400 includes a processor 1410. The processor 1410 may invoke and run a computer program from a memory to implement the methods in the embodiments of the present disclosure.

In some embodiments, as illustrated in FIG. 14, the chip 1400 may further include a memory 1420. The processor 1410 may invoke and run a computer program from the memory 1420 to implement the methods in the embodiments of the present disclosure.

The memory 1420 may be a separate component independent of the processor 1410, or may be integrated in the processor 1410.

In some embodiments, the chip 1400 may further include an input interface 1430. The processor 1410 may control the input interface 1430 to perform communication with other devices or chips. Specifically, the input interface may obtain information or data transmitted by other devices or chips.

In some embodiments, the chip 1400 may further include an output interface 1440. The processor 1410 may control the output interface 1440 to perform communication with other devices or chips. Specifically, the output interface may output information or data to other devices or chips.

In some embodiments, the chip may be applied to the network device in the embodiments of the present disclosure. For conciseness, further details are omitted here.

In some embodiments, the chip may be applied to the first terminal device in the embodiments of the present disclosure. For conciseness, further details are omitted here.

It should be understood that the chip mentioned in the embodiment of the present disclosure may also be referred to as a system-level chip, a system chip, a chip system, or a system-on-chip chip, or the like.

FIG. 15 is a schematic block diagram of a communication system 1500 according to an embodiment of the present disclosure. As illustrated in FIG. 15, the communication system 1500 includes a terminal device 1510 and a network device 1520.

The terminal device 1510 may be used for implementing corresponding functions implemented by the first terminal device in the methods described above, and the network device 1520 may be used for implementing corresponding functions implemented by the network device in the methods described above. For conciseness, further details are omitted here.

It can be understood that the processor in the embodiments of the present disclosure may be an integrated circuit chip having signal processing capability. During implementation, each operation in the method embodiments described above may be completed by an integrated logic circuit of hardware in a processor or instructions in the form of software. The above processor may be a general-purpose processor, a digital signal processor (DSP), an application specific integrated circuit (ASIC), a field programmable gate array (FPGA) or other programmable logic devices, a discrete gate or transistor logic device, or a discrete hardware component. The various methods, operations, and logical block diagrams disclosed in the embodiments of the present disclosure may be implemented or executed. The general-purpose processor may be a microprocessor, or the processor may also be any conventional processor, or the like. The operations of the methods disclosed in combination with the embodiments of the present disclosure may be directly executed and completed by a hardware decoding processor, or executed and completed by a combination of hardware and software modules in the decoding processor. Software modules may be located in a mature storage medium in the field such as a random access memory, a flash memory, a read-only memory, a programmable read-only memory, an electrically erasable programmable memory, or a register. The storage medium is located in the memory, and the processor reads the information in the memory, and completes the operations of the above methods in combination with its hardware.

It can also be understood that the memory in the embodiments of the present disclosure may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random access memory (RAM), which acts as an external cache. By way of example, but not by way of limitation, many forms of RAMs are available, such as static random access memories (SRAMs), dynamic random access memories (DRAMs), synchronous dynamic random access memories (SDRAMs), double data rate synchronous dynamic random access memories (DDR SDRAMs), enhanced synchronous dynamic random access memories (ESDRAMs), synchlink dynamic random access memories (SLDRAMs) and direct rambus random access memories (DR RAMs). It should be noted that the memory described herein is intended to include, but is not limited to, the foregoing and any other suitable type of memory.

It can also be understood that the above-described memory is illustrative but not restrictive. For example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), a direct rambus random access memory (DR RAM), or the like. That is, the memory in the embodiments of the present disclosure is intended to include, but is not limited to, the foregoing and any other suitable type of memory.

A computer-readable storage medium for storing a computer program is further provided in an embodiment of the present disclosure.

In some embodiments, the computer-readable storage medium may be applied to the first terminal device in the embodiments of the present disclosure, and the computer program, when executed by at least one processor, implements the corresponding processes implemented by the first terminal device in the respective methods of the embodiments of the present disclosure, which will not be repeated herein for the sake of brevity.

In some embodiments, the computer-readable storage medium may be applied to the network device in the embodiments of the present disclosure, and the computer program, when executed by at least one processor, implements the corresponding processes implemented by the network device in the respective methods of the embodiments of the present disclosure, which will not be repeated herein for the sake of brevity.

A computer program product including computer program instructions is further provided in an embodiment of the present disclosure.

In some embodiments, the computer program product may be applied to the first terminal device in the embodiments of the present disclosure, and the computer program instructions enable a computer to execute the corresponding processes implemented by the first terminal device in the respective methods of the embodiments of the present disclosure, which will not be repeated herein for the sake of brevity.

In some embodiments, the computer program product may be applied to the network device in the embodiments of the present disclosure, and the computer program instructions enable a computer to execute the corresponding processes implemented by the network device in the respective methods of the embodiments of the present disclosure, which will not be repeated herein for the sake of brevity.

A computer program is further provided in an embodiment of the present disclosure.

In some embodiments, the computer program may be applied to the first terminal device in the embodiments of the present disclosure, and the computer program, when run on a computer, enables the computer to execute the corresponding processes implemented by the first terminal device in the respective methods of the embodiments of the present disclosure, which will not be repeated herein for the sake of brevity.

In some embodiments, the computer program may be applied to the network device in the embodiments of the present disclosure, and the computer program, when run on a computer, enables the computer to execute the corresponding processes implemented by the network device in the respective methods of the embodiments of the present disclosure, which will not be repeated herein for the sake of brevity.

A person skilled in the art can appreciate that the units and algorithm operations of the examples described in combination with the embodiments disclosed in the present disclosure can be implemented by electronic hardware, or a combination of computer software and electronic hardware. These functions are executed in hardware or software, depending on the specific applications and design constraints of the technical solutions. A professional skilled person may use different methods for each specific application to implement the described functions, but said implementation should not be considered to exceed the scope of the present disclosure.

It can be clearly understood by a person skilled in the art that for the convenience and brevity of the description, reference may be made to the corresponding processes in the foregoing method embodiments for the specific working process of the apparatuses and units described above, which will not be repeated here.

In several embodiments provided by the present disclosure, it should be understood that the disclosed apparatuses and methods may be implemented in other manners. For example, the apparatus embodiments described above are merely illustrative. For example, the division of the units is only a logical function division. During actual implementation, there may be other division methods. For example, multiple units or components may be combined or integrated into another system, or some features may be ignored or not implemented. Furthermore, the displayed or discussed coupling or direct coupling or communication connections may be indirect coupling or communication connections through some interfaces, apparatuses or units, and may be in electrical, mechanical or other forms.

The units described as separate components may or may not be physically separated, and the components displayed as units may or may not be physical units, that is, they may be located in one place, or may be distributed to multiple network units. A part or all of the units may be selected according to actual needs to achieve the objective of the solutions of the present embodiments.

In addition, the functional units in various embodiments of the present disclosure may be integrated in one processing unit, or each unit may be individually physically present, or two or more units may be integrated into one unit.

If the functions described above are implemented in the form of software function units and sold or used as separate products, they may be stored in a computer-readable storage medium. On the basis of such understanding, essential part of the technical solutions of the present disclosure, or the part thereof that contributes to the related art, or a part of the technical solutions may be embodied in the form of a software product. The computer software product is stored in a storage medium, and includes several instructions used to enable a computer device (which may be a personal computer, a server, a network device, or the like) to perform all or part of the operations of the methods described in the various embodiments of the present disclosure. The foregoing storage medium includes: a U disk, a mobile hard disk, a ROM, a RAM, a magnetic disk, an optical disk, or various media that can store program codes.

It should be noted that in the present disclosure, the terms "comprising", "including" or any other variation thereof are intended to indicate non-exclusive inclusion, so that processes, methods, articles or devices including a series of elements not only include those elements, but also include other elements not explicitly listed, or elements inherent to such processes, methods, articles, or devices. In the absence of more limitations, an element defined by the statement "including a..." does not preclude the presence of additional same elements in a process, method, article or device that includes the element.

The above-mentioned serial numbers of the embodiments of the present disclosure are merely for the purpose of description and do not represent advantages or disadvantages of the embodiments.

The methods disclosed in several method embodiments provided by the present disclosure may be arbitrarily combined without conflict to obtain new method embodiments.

The features disclosed in several product embodiments provided by the present disclosure may be arbitrarily combined without conflict to obtain new product embodiments.

The features disclosed in several method or apparatus embodiments provided by the present disclosure may be arbitrarily combined without conflict to obtain new method embodiments or apparatus embodiments.

The above descriptions are merely specific embodiments of the present disclosure, but the scope of protection of the present disclosure is not limited thereto. Any person skilled in the art can easily conceive of changes or substitutions within the technical scope disclosed in the present disclosure, and all of the changes or substitutions should be covered by the scope of protection of the present disclosure. Therefore, the scope of protection of the present disclosure should be defined by the scope of protection of the claims.

## Claims

1. A communication method, comprising:
receiving, by a first terminal device, first information, the first information being used to indicate whether terminal device(s) corresponding to each of one or more types are allowed to access a first cell.

2. The method according to claim 1, wherein the first information comprises one or more of the following:
configuration information for configuring uplink transmission resources corresponding to part of the one or more types;
first indication information for indicating whether the terminal device(s) corresponding to each of the one or more types are allowed to access the first cell;
second indication information for indicating a probability that the terminal device(s) corresponding to each of the one or more types are allowed to access the first cell;
third indication information for indicating whether terminal device(s) corresponding to part of the one or more types are allowed to access an intra-frequency cell of the first cell when the terminal device(s) corresponding to the part of the one or more types are not allowed to access the first cell; and
fourth indication information for indicating a minimum time interval starting from a current moment when terminal device(s) corresponding to part of the one or more types fail in an attempt to access the first cell at the current moment, wherein after the minimum time interval, the terminal device(s) corresponding to the part of the one or more types are allowed to make a next attempt to access the first cell.

3. The method according to claim 1 or 2, wherein whether the first terminal device is allowed to access the first cell is determined based on the first information and a first type of the first terminal device, the first type being one of the one or more types.

4. The method according to claim 3, wherein the first information comprises the configuration information, and the method further comprises:
when the configuration information configures uplink transmission resources corresponding to the first type, determining, by the first terminal device, that the first terminal device is allowed to access the first cell; or,
when the configuration information does not configure uplink transmission resources corresponding to the first type, determining, by the first terminal device, that the first terminal device is not allowed to access the first cell.

5. The method according to claim 3 or 4, wherein the first information comprises the first indication information, and the method further comprises:
when the first indication information indicates that terminal device(s) corresponding to the first type are allowed to access the first cell, determining, by the first terminal device, that the first terminal device is allowed to access the first cell; or,
when the first indication information indicates that terminal device(s) corresponding to the first type are not allowed to access the first cell, determining, by the first terminal device, that the first terminal device is not allowed to access the first cell.

6. The method according to any one of claims 3 to 5, wherein the first information comprises the second indication information, the second indication information indicates a probability that terminal device(s) corresponding to the first type are allowed to access the first cell, and the method further comprises:
when a random number of the first terminal device is less than or equal to the probability, determining, by the first terminal device, that the first terminal device is allowed to access the first cell; or,
when a random number of the first terminal device is greater than the probability, determining, by the first terminal device, that the first terminal device is not allowed to access the first cell.

7. The method according to any one of claims 3 to 6, wherein the first information comprises the third indication information, and the method further comprises:
when the third indication information indicates that terminal device(s) corresponding to the first type are not allowed to access the first cell and are allowed to access the intra-frequency cell of the first cell, determining, by the first terminal device, that the first terminal device is not allowed to access the first cell and is allowed to access the intra-frequency cell of the first cell; or,
when the third indication information indicates that terminal device(s) corresponding to the first type are not allowed to access the first cell and are not allowed to access the intra-frequency cell of the first cell, determining, by the first terminal device, that the first terminal device is not allowed to access the first cell and is not allowed to access the intra-frequency cell of the first cell.

8. The method according to any one of claims 3 to 7, wherein the first information comprises the fourth indication information, and the method further comprises:
when the fourth indication information indicates that terminal device(s) corresponding to the first type fail in an attempt to access the first cell at the current moment and indicates the minimum time interval starting from the current moment, after which the terminal device(s) corresponding to the first type are allowed to make a next attempt to access the first cell, determining, by the first terminal device, that the first terminal device is allowed to attempt to access the first cell at a next moment;
wherein a difference between the next moment and the current moment is greater than the minimum time interval.

9. The method according to any one of claims 1 to 8, wherein the type of the terminal device comprises a device type of the terminal device and/or a service type of the terminal device.

10. The method according to claim 9, wherein the device type of the terminal device is determined based on one or more of the following:
whether the terminal device is a zero-power device;
whether the terminal device is capable of independently generating a radio frequency signal when the terminal device is the zero-power device; and
whether the terminal device is capable of storing power when the terminal device is the zero-power device.

11. A communication method, comprising:
transmitting, by a network device, first information, the first information being used to indicate whether terminal device(s) corresponding to each of one or more types are allowed to access a first cell.

12. The method according to claim 11, wherein the first information comprises one or more of the following:
configuration information for configuring uplink transmission resources corresponding to part of the one or more types;
first indication information for indicating whether the terminal device(s) corresponding to each of the one or more types are allowed to access the first cell;
second indication information for indicating a probability that the terminal device(s) corresponding to each of the one or more types are allowed to access the first cell;
third indication information for indicating whether terminal device(s) corresponding to part of the one or more types are allowed to access an intra-frequency cell of the first cell when the terminal device(s) corresponding to the part of the one or more types are not allowed to access the first cell; and
fourth indication information for indicating a minimum time interval starting from a current moment when terminal device(s) corresponding to part of the one or more types fail in an attempt to access the first cell at the current moment, wherein after the minimum time interval, the terminal device(s) corresponding to the part of the one or more types are allowed to make a next attempt to access the first cell.

13. The method according to claim 11 or 12, wherein the type of the terminal device comprises a device type of the terminal device and/or a service type of the terminal device.

14. The method according to claim 13, wherein the device type of the terminal device is determined based on one or more of the following:
whether the terminal device is a zero-power device;
whether the terminal device is capable of independently generating a radio frequency signal when the terminal device is the zero-power device; and
whether the terminal device is capable of storing power when the terminal device is the zero-power device.

15. A communication apparatus, comprising:
a receiving unit, configured to receive first information, the first information being used to indicate whether terminal device(s) corresponding to each of one or more types are allowed to access a first cell.

16. A communication apparatus, comprising:
a transmitting unit, configured to transmit first information, the first information being used to indicate whether terminal device(s) corresponding to each of one or more types are allowed to access a first cell.

17. A communication device, comprising: a processor and a memory, wherein the memory is configured to store a computer program, and the processor is configured to invoke and run the computer program stored in the memory to execute the method according to any one of claims 1 to 10; or to execute the method according to any one of claims 11 to 14.

18. A chip, comprising: a processor, configured to invoke and run a computer program from a memory, such that a device installed with the chip executes the method according to any one of claims 1 to 10; or executes the method according to any one of claims 11 to 14.

19. A computer-readable storage medium for storing a computer program that, when executed by at least one processor, performs the method according to any one of claims 1 to 10; or performs the method according to any one of claims 11 to 14.

20. A computer program product, comprising computer program instructions that cause a computer to execute the method according to any one of claims 1 to 10; or to execute the method according to any one of claims 11 to 14.

21. A computer program for causing a computer to execute the method according to any one of claims 1 to 10; or to execute the method according to any one of claims 11 to 14.
